# EUROPÄISCHE PATENTSCHRIFT

(11) **EP 1 789 740 B1**
(45) Veröffentlichungstag und Bekanntmachung des Hinweises auf die Patenterteilung: **29.02.2012**
(21) Anmeldenummer: 05776652.9
(22) Anmeldetag: 26.08.2005
(51) Int. Cl.: F26B 9/10, A01F 25/08

(54) **VERFAHREN ZUR TROCKNUNG VON BIOMASSE**
METHOD FOR DRYING BIOMASS
PROCEDE POUR ASSECHER UNE BIOMASSE

(30) Priorität: 27.08.2004 DE 102004042285
(43) Veröffentlichungstag der Anmeldung: 30.05.2007
(73) Patentinhaber: Technische Universität Dresden, 01069 Dresden (DE)
(72) Erfinder: BRUMMACK, Joachim, 01069 Dresden (DE); POLSTER, Andreas, 01069 Dresden (DE)
(74) Vertreter: Rauschenbach, Marion
(86) Internationale Anmeldenummer: PCT/EP2005/009241
(87) Internationale Veröffentlichungsnummer: WO 2006/024463

(56) Entgegenhaltungen:
- EP-A- 1 139 047
- BE-A6- 1 000 738
- CH-A- 124 804
- DD-A1- 209 252
- DE-A1- 4 436 209
- DE-A1- 10 027 728
- DE-C- 258 265
- DE-C- 313 600
- FR-A- 2 461 443
- FR-A- 2 828 989
- US-A- 722 118
- US-A- 3 280 473
- US-A- 4 502 369
- US-A- 4 561 194
- US-A- 4 690 041
- DATABASE WPI Section PQ, Week 197516 Derwent Publications Ltd., London, GB; Class P12, AN 1975-E2524W XP002355867 & NL 7 313 488 A (INSTITUUT VOOR BEWARING EN VERWERKING VAN LANDBOUWPRODUKTEN) 3. April 1975 (1975-04-03)

## Beschreibung

Die Erfindung bezieht sich auf die Gebiete Abfallwirtschaft sowie Nutzung nachwachsender Rohstoffe und betrifft ein Verfahren zur Trocknung von Biomasse, welches beispielsweise bei der Trocknung von zerkleinertem waldfrischen Rest- und Energieholz oder nativ-organischen Schlämmen zur Anwendung kommen kann.

Bekannt sind verschiedene Verfahren zur Verrottung und Kompostierung von Biomassen. Ziel dieser Verfahren ist der Abbau von biogenen Kohlenstoffverbindungen (biologische Stabilisierung).

Die vorliegende Lösung betrifft jedoch nicht dieses Gebiet, sondern ausschließlich die Trocknung von Biomasse, als Voraussetzung für nachfolgende Prozesse wie beispielsweise eine thermischen Verwertung.

Nach der WO 99/40045 A1 ist ein Verfahren und eine Vorrichtung zur Trocknung von organischen Abfällen bekannt, bei dem die Trocknung in zwei zeitlich aufeinanderfolgenden Trocknungsstufen realisiert wird, wobei die zur Belüftung der ersten Stufe eingeführte Luftmenge aus der Abluft der zweiten Stufe gewonnen wird. Dazu ist die Belüftungseinrichtung des ersten Raumes mit der Abluftleitung des zweiten Raumes verbunden.

Der Nachteil dieser Lösung besteht darin, das zwei separate geschlossene Räume vorhanden sein müssen und das Verfahren einen hohen apparativen sowie energetischen Aufwand erfordert.

Aus der DE 31 07 186 C2 ist weiterhin ein Trocknungsschuppen zum Trocknen von Heizholz bekannt, der aus einem im Abstand über dem Boden angeordneten Latten- oder Gitterrost besteht und zwischen den Wänden und dem Dach und zwischen den Wänden und dem Boden jeweils ein Freiraum besteht, zum Eintritt von Umgebungsluft von oben und zum Austritt von mit Feuchtigkeit beladener Abluft von unten.

Der Nachteil dieser Lösung ist, dass aufgrund physikalischer Gesetze eine derartige Durchströmung des Holzstapels nicht vorrangig stattfindet und demzufolge durch die Lösung selbst kein Trocknungseffekt eintreten wird.

Nach der DE 43 36 415 C2 ist ein Verfahren zur Trocknung von Holzhackschnitzeln aus Nadelholz, insbesondere Kiefernholz, bekannt, wonach die Holzhackschnitzel im Anlieferungszustand in einem lockeren, natürliche Drainagen ausbildenden Haufwerk auf einer festen Unterlage aufgeschüttet und zeitlich gesteuert gelagert werden, wobei das Haufwerk eine Mindesthöhe von 2,5 m, eine Dichte von 250 - 350 kg/m³ von der Sohle bis zur Krone und eine Teilchengröße von 5 mm bis 40 mm bei geringem Feinkornanteil locker aufgeschüttet aufweist, so dass die Bildung von natürlichen Drainagen im Haufwerk und eine Trocknung ohne Energiezufuhr von außen gewährleistet wird.

Der Nachteil dieser Lösung besteht darin, dass eine gleichmäßige Ausbildung von natürlichen Drainagen über das gesamte Haufwerk verteilt nicht realisiert und damit auch keine gleichmäßige Trocknung des Haufwerkes insgesamt realisiert werden kann.

Aus der DE 44 36 209 C2 ist ein Verfahren und eine Anordnung zum Trocknen von Holzhackschnitzeln aus Nadelholz, insbesondere aus Kieferndünnholz, bekannt, nach der Holzhackschnitzel in einem lockeren Haufwerk gemäß DE 43 36 415 in einer Durchlauf- und Puffer-Anordnung dynamisch gelagert werden und auf dem festen Untergrund eine Schicht grobes Holzgut aufgetragen und die Holzhackschnitzel natürlich konvektiv längs- und querbeströmt wird. Diese Längs- und Querbeströmung soll durch im und aus dem groben Holzgut natürlich gebildete Längs- und Querkanäle realisiert werden.

Auch hier ist eine gleichmäßige natürliche Bildung von Längs- und Querkanälen in dem groben Holzgut über dessen gesamtes Volumen nicht realisierbar.

Weiterhin ist die DE 44 36 208 C2 bekannt, nach der das Verfahren zur Trocknung von Holzhackschnitzeln aus Nadelholz, insbesondere Kieferndünnholz, entsprechend DE 43 36 415 realisiert wird und zusätzlich nährstoffreiches Material in das Haufwerk eingebracht wird.

Durch diese Lösung sind die Nachteile der DE 43 36 415 nicht behoben, eher noch verschlechtert, da das nährstoffreiche Material die Ausbildung der natürlichen Drainagen aufgrund seiner geringen Korngröße noch weiter behindern kann.

Nach der EP 0 430 933 B1 ist eine Vorrichtung und ein Verfahren zum Trocknen von losem Material auf der Basis organischer Fasern an Luft bekannt, welches aus einem langgestreckten Trockengestell besteht, auf dem die Miete aus dem losen Material aufgebaut wird und das Trockengestell mit dem Boden einen Luftstromkanal ausbildet und ein Abdeckmittel vorhanden ist, welches einen Luftspalt über der Miete zum Durchgang von feuchter Luft realisiert. Zur Durchströmung des losen Materials wird über ein Gebläse Luft in das Haufwerk eingeblasen.

Der Nachteil dieser Lösung ist, dass die Abdeckung physikalisch wie ein Kondensator wirkt, wobei die an ihnen niedergeschlagene Feuchtigkeit wieder auf die Haufwerksoberfläche zurücktropft.

Weiterhin ist nach der US 4,561,194 eine Heutrockenvorrichtung bekannt. Diese Vorrichtung besteht aus einem Boden, in dem Kanäle angeordnet sind und auf denen Belüftungsvorrichtungen in Form von ventilartigen Düsen angeordnet sind. Weiterhin sind auf dem Boden Entlüftungsvorrichtungen ebenfalls in Form von ventilartigen Düsen vorhanden. Auf diesem Boden wird das Heuhaufwerk positioniert. Mittels eines Gebläses und eines Heizers wird erwärmte Luft über die Kanäle und Belüftungsvorrichtungen in das Heuhaufwerk eingetragen und über die Entlüftungsvorrichtungen und die Oberfläche des Heuhaufwerkes aufgetragen.

Die Aufgabe der Erfindung ist es, ein Verfahren zur Trocknung von Biomasse anzugeben, bei dem eine schnelle und anhaltende Trocknung der Biomasse auf Feuchtigkeitswerte unterhalb der Verrottung- und Kompostierungsgrenze bis zur Trockenstabilisierung realisiert wird.

Die Aufgabe wird durch die in den Ansprüchen angegebene Erfindung gelöst. Weiterbildungen sind Gegenstand der Unteransprüche.

Bei dem erfindungsgemäßen Verfahren zur Trocknung von Biomasse werden auf einem festen Untergrund Be- und Entlüftungsvorrichtungen in regelmäßigen Abständen innerhalb eines Haufwerkes und auch zueinander positioniert, wobei die Belüftungsvorrichtungen am Boden des Haufwerkes angeordnet werden und die Entlüftungsvorrichtungen vom Boden des Haufwerkes bis über die Oberkante des Haufwerkes insgesamt hinaus angeordnet werden. Durch diese Anordnung wird eine Durchströmung des gesamten Haufwerkes von den Be- zu den Entlüftungsvorrichtungen realisiert. Danach wird ein Haufwerk ganz oder teilweise aus Biomasse und unter Vermeidung des Eintrags von zusätzlicher Feuchtigkeit in die eingesetzte Biomasse in Form einer Miete über den Be- und Entlüftungsvorrichtungen angeordnet und das Haufwerk auf seiner Oberfläche mit einer thermisch isolierenden Schicht versehen, die weiterhin technisch gasdicht und feuchtigkeitsabweisend oder feuchtigkeitsspeichernd ausgebildet ist.

Vorteilhafterweise wird der feste Untergrund stauwasserfrei und befahrbar ausgewählt.

Ebenfalls vorteilhafterweise wird die Anordnung eines Haufwerkes als trapez- oder dreiecksförmige Miete realisiert.

Weiterhin vorteilhafterweise wird die thermisch isolierende Oberflächenschicht gleichzeitig niederschlagsspeichernd ausgebildet.

Es ist weiterhin von Vorteil, wenn durch die Belüftungsvorrichtungen die Zufuhr von Frischluft am Boden in das Haufwerk realisiert wird.

Von Vorteil ist es auch, wenn Belüftungsvorrichtungen in Form eines Kanals mit einem runden oder dreieckigen oder mehreckigen Querschnitt eingesetzt werden.

Ein weiterer Vorteil besteht darin, dass durch die Entlüftungsvorrichtungen die Ableitung der im Haufwerk entstandenen und vorhandenen Abluft realisiert wird.

Ebenfalls von Vorteil ist es, wenn die Entlüftungsvorrichtungen in Form eines Pyramidenstumpfes mit einer am oberen Ende angesetzten rohrartigen Verlängerung, die mindestens über die Haufwerksoberfläche hinausragt, eingesetzt werden.

Es ist auch von Vorteil, wenn als thermisch isolierende Schicht ein thermisch isolierendes Material mit einem Wärmeüberleitkoeffizienten von 0,1 bis 1,0 W/m² K, vorteilhafterweise von 0,4 W/m² K eingesetzt wird.

Und auch von Vorteil ist es, wenn als thermisch isolierendes und wasserabweisendes Material Polystyrol oder Holzspäne in Verbindung mit einer Polyethylenfolie eingesetzt wird.

Und vorteilhaft ist auch, wenn als thermisch isolierendes Material Erde oder verrottetes Material mit einem Wassergehalt von maximal 35 Masse-% mit einer Dicke von 0,1 bis 0,5 m zur Realisierung eines Wärmeüberleitkoeffizienten von 0,2 bis 0,4 W/ m² K eingesetzt werden.

Weiterhin von Vorteil ist es, wenn als thermisch isolierendes Material die Wandungen von ortsfesten Anlagen, insbesondere aus Holz und/oder auf der Basis von Beton eingesetzt werden und noch vorteilhafterweise ist es, wenn als thermisch isolierendes Material im Seitenbereich des Haufwerkes Holzwände von ortsfesten Anlagen und im Deckenbereich des Haufwerkes Polystyrol oder Holzspäne in Verbindung mit einer Polyethylenfolie oder Erde oder verrottetes Material eingesetzt werden.

Mit dem erfindungsgemäßen Verfahren wird es möglich, relativ schnell das Haufwerk aus Biomasse auf Feuchtigkeitswerte unterhalb der Verrottungs- und Kompostierungsgrenze, insbesondere auf Restfeuchten ≤ 20 Ma.-% (Trockenstabilisierung) zu trocknen und auch in diesem Zustand zu halten, so dass eine unmittelbar an die Trocknung anschließende Lagerung der getrockneten Biomasse auch über eine längere Zeit möglich ist.

Anfallbedingt weisen die erfindungsgemäß einsetzbaren Biomassen, wie beispielsweise waldfrisches Restholz oder Holz aus Energieholzplantagen oder kommunale Klärschlämme oder industriellen Bioabfälle Feuchtegehalte von ≥ 50 Ma.-% und mehr auf. Damit sind diese Biomassen nicht direkt einer weiteren stofflichen und/oder energetischen Nutzung, wie beispielsweise einer Verbrennung oder Vergasung, zugänglich. Für eine Nutzung müssen sie vorher getrocknet und möglicherweise auch über eine längere Zeit gelagert werden. Die Lagerung als Zwischenspeicherung ist beispielsweise wichtig, um bei der Energiegewinnung Versorgungssicherheit zu gewährleisten.

Tatsächlich existieren für die natürliche Trocknung von Biomassen im industriellen, großtechnischen Maßstab so gut wie keine praktikablen Lösungen. Als natürliche Trocknung werden alle Verfahren bezeichnet, die ohne Aufwendung fremdenergiebetriebener technischer Trocknungsapparate, wie Bandtrockner, arbeiten. Für zerkleinertes Holz erfolgt eine Trocknung und Lagerung üblicherweise im Freien oder unter Dächern und unter Ausnutzung von Sonne und Wind. Im Bedarfsfalle werden die Haufwerke ein- oder mehrmals umgesetzt. Trocknungszeit und Restfeuchte hängen damit im Wesentlichen von den Witterungsbedingungen ab. Bereits getrocknete Chargen werden oft durch Abdeckungen vor Wiederbefeuchtung geschützt. Schlämme werden überwiegend in technischen Trocknungsapparaten, wie Scheibentrocknern, getrocknet und dann weiterverwendet.

Die bekannten Verfahren ohne Anwendung fremdenergiebetriebener technischer Trocknungsapparate sind sehr zeitaufwändig und verursachen, gemessen an ihrem geringen und nicht vorhersehbaren Erfolg, hohe Kosten schon allein für die benötigten Flächen und gegebenenfalls Überdachungen.

Die vorliegende Erfindung stellt kein Verfahren zur natürlichen Trocknung gemäß der angeführten Definition dar.

Die zu trocknenden Biomassen weisen anfallbedingt Feuchtigkeitswerte von ≥ 50 Ma.-% auf. Damit sind alle Bedingungen für einen spontan einsetzenden biologischen Abbau der leichtabbaubaren Bestandteile von Biomassen vorhanden und ein damit verbundener Heizwertverlust unvermeidbar. Eine Belüftung ist zur Realisierung dieses biologischen Abbaus nicht erforderlich.

Der generelle Nachteil der Lösungen nach dem Stand der Technik, die zur Trocknung die biochemisch initiierte Selbsterwärmung nutzen, besteht darin, dass die physikalisch bedingt feuchtegesättigte und gegenüber der Umgebung wärmere Luft durch die Oberfläche eines Haufwerkes nach außen treten muss. Die Bewegung der Luft wird durch natürliche Konvektion hervorgerufen. In Abhängigkeit von der Temperatur der Außenluft wird die feuchtegesättigte Luft dann bis unter den Taupunkt abgekühlt. Bei den Lösungen nach dem Stand der Technik findet die Abkühlung und die damit verbundene Kondensation von Feuchtigkeit im Bereich der Oberfläche innerhalb eines Haufwerkes entsprechend dem Temperaturverlauf zwischen Haufwerk und Umgebung statt. Die biologische Selbsterwärmung führt somit nicht zu einem effektiven Austrag von Wasser und damit zu keiner gleichmäßigen und vor allem vollständigen Trocknung der Biomasse.

Durch die erfindungsgemäße Lösung wird in Haufwerken aus Biomassen eine wirkungsvolle Durchströmung des Biomaterials realisiert und somit die unvermeidbar ablaufenden biochemischen Prozesse zur gezielten Trocknung genutzt. Angetrieben wird die Durchströmung konvektiv. Durch die ablaufenden biochemischen Prozesse beim Abbau von Teilen der Biomasse wird Wärme erzeugt und die im Haufwerk vorhandene und eingetragene Luft erwärmt und aufgrund der vorhandenen Feuchtigkeit mit Wasserdampf angereichert und gesättigt. Diese wasserdampfgesättigte Luft wird dann durch die aufgrund der Anordnung der Be- und Entlüftungsvorrichtungen kontinuierlich aus dem Haufwerk ausgetragen. Damit sinkt der Feuchtigkeitsgehalt im Haufwerk kontinuierlich und die Biomasse wird getrocknet. Sinkt der Feuchigkeitsgehalt auf Werte zwischen 25 bis 20 Ma.-%, so kommen die biochemischen Zersetzungsprozesse schrittweise zum Erliegen. In dem Maße, wie die biochemischen Wärmefreisetzungsprozesse zum Erliegen kommen, erfolgt die Weiterführung der Trocknung durch die Nutzung der im Haufwerk gespeicherte Wärme. Das Haufwerk kühlt sich dabei verstärkt ab. Durch Nutzung dieses Effektes erfolgt eine sichere Trocknung bis zur Trockenstabilisierung. Die schwerabbaubaren Bestandteile der Biomasse, bei Holz Lignin und Zellulose, bleiben weitestgehend erhalten.

Die erfindungsgemäße im wesentlichen vollständige Durchströmung des Haufwerkes aus Biomasse wird im wesentlichen erreicht, durch die Anordnung der Be- und Entlüftungsvorrichtungen. Die Belüftungsvorrichtungen am Boden des Haufwerkes ermöglichen den Eintritt von Umgebungsfrischluft, die durch die in Abständen zu den Belüftungsvorrichtungen angeordneten Entlüftungsvorrichtungen mit ihrer Verbindung zur Umgebungsluft und nach Antrieb durch die einsetzenden biochemischen Prozesse und unter Ausnutzung des Kamineffektes nach Durchströmung des gesamten Haufwerkes durch die Entlüftungsvorrichtungen wieder aus dem Haufwerk austritt. Der Kamineffekt kann noch verstärkt werden, wenn die Entlüftungsvorrichtungen eine möglichst hohe kanalartige Verlängerung über die Oberfläche des Haufwerkes hinaus aufweisen. Die auftriebswirksame Höhe kann damit von der technisch begrenzten Haufwerkshöhe entkoppelt werden. Damit über die gesamte mit der Umgebungsluft in Verbindung stehende Oberfläche des Haufwerkes möglichst kein Stoff- und Energieaustausch realisiert wird, wird das Haufwerk auf seiner gesamten mit der Umgebungsluft in Verbindung stehende Oberfläche mit einer thermisch isolierenden und technisch gasdichten und feuchtigkeitsabweisenden oder feuchtigkeitsspeichernden Schicht abgedeckt. Damit werden einerseits der Start des Durchströmungsprozesses und andererseits die Aufrechterhaltung der Durchströmung gewährleistet. Die Frischluft tritt dann im wesentlichen nur durch die Belüftungsvorrichtungen am Boden des Haufwerkes ein und die mehr oder weniger feuchtigkeitsbeladene Abluft verlässt das Haufwerk dann im wesentlichen nur über die Entlüftungsvorrichtungen. Damit wird eine Temperaturabsenkung über die Oberfläche eines offenen Haufwerkes weitestgehend vermieden und ein Auskondensieren von Feuchtigkeit nach Unterschreiten des Taupunktes der Luft tritt dann punktuell nur in den Austritten der Entlüftungsvorrichtungen auf. Diese Feuchtigkeit wird durch die erfindungsgemäße Anordnung und Ausführung der Entlüftungsvorrichtung vom zu trocknenden Gut weitestgehend ferngehalten.

Die Abdeckung der Oberfläche des Haufwerkes durch eine thermisch isolierende Schicht, die weiterhin technisch gasdicht und feuchtigkeitsabweisend oder feuchtigkeitsspeichernd ist, schützt das Haufwerk weiterhin vor dem Eintrag von witterungsbedingter Feuchtigkeit in das Haufwerk. Dies kann einerseits durch die Dicke der Schicht und/oder andererseits auch durch den Einsatz von feuchtigkeitsspeichernden oder feuchtigkeitsabweisenden Materialien erreicht werden. Dazu können beispielsweise bis zu 0,5 m dicke Erdschichten und/oder Schichten aus getrocknetem und/oder verrottetem und/oder kompostiertem Material oder auch Polystyrolplatten oder trockene Holzspäne mit einer Polyethylenfolie eingesetzt werden. Bei Anwendung von feuchtigkeitsabweisenden Materialien sind geringere Schichtdicken der Abdeckschicht realisierbar.

Die Ausführung der Abdeckung ist für die Realisierung der Trocknung des Haufwerkes von großer Bedeutung. Durch die durch sie realisierte thermische Isolation des Haufwerkes gegenüber der Umgebungsluft wird die Unterschreitung des Taupunktes der im Haufwerk vorhandenen Feuchtigkeit vermieden. Ein Austrag der Wärmeenergie erfolgt erfindungsgemäß nur über die Öffnungen der Entlüftungsvorrichtungen, deren Fläche im Verhältnis zur Haufwerksoberfläche sehr viel kleiner ist.

Durch die realisierte technische Gasdichtheit der Abdeckung wird ein Stoffaustausch mit der Umgebung vermieden. Gleichzeitig werden dadurch die Strömungsverhältnisse im Haufwerk wesentlich beeinflusst. Die erfindungsgemäßen Strömungsverhältnisse gewährleisten ein im wesentlichen vollständiges Durchströmen des gesamten Haufwerkes und damit ein Feuchtigkeitsaustrag aus dem gesamten Haufwerk.

Durch die realisierte Abweisung oder Speicherung von Feuchtigkeit durch die Abdeckung wird der Eintrag von weitere Feuchtigkeit aus der Umgebung in das Haufwerk vermieden. Gleichzeitig wird aber dadurch auch der Austrag von Feuchtigkeit aus dem Haufwerk über die Oberfläche des Haufwerkes weitestgehend unterbunden.

Ein wesentlicher Vorteil der erfindungsgemäßem Lösung besteht in der Vermeidung des Einsatzes von Fremdenergien. Durch Kombination der biochemischen und physikalischen Prozesse ist eine zusätzliche Belüftung oder ein Energieeintrag in anderer Form nicht erforderlich oder notwendig. Trotzdem kann das erfindungsgemäße Verfahren durch den Einsatz von Fremdenergie beschleunigt werden, ohne das Änderungen im Verfahrensablauf auftreten. Dazu kann beispielsweise mit Ventilatoren Luft in die Belüftungsvorrichtungen gedrückt werden. Vorzugsweise kann ein durch einen Ventilator erzeugter Schleppstrahl in den Entlüftungsvorrichtungen eingetragen werden, was einen gewissen Saugeffekt für die Luftbewegung führt, wozu beispielsweise Ventilatoren mit einer Leistungsaufnahme von 50 W pro Entlüftungsvorrichtung schon ausreichend sind. Da derartige Maßnahmen das erfindungsgemäße Verfahren aber verteuern würden und nicht prinzipiell erforderlich sind, stehen sie vorzugsweise bei besonderen Erfordernissen, wie beispielsweise bei einer gewünschten zusätzlichen Verkürzung der Trockenzeit als grundsätzlich verfügbare Option zur Verfügung.

Ebenfalls kann auf ortsfeste Anlagen und Vorrichtungen verzichtet werden. Erforderlich ist ein fester Untergrund, der vorteilhafterweise während der gesamten Trocknung und gegebenenfalls Lagerung stauwasserfrei und befahrbar sein sollte. Die Befahrbarkeit des Untergrundes ermöglicht die Aufsetzung der Be- und Entlüftungsvorrichtungen und des Haufwerkes selbst durch entsprechende Maschinen, was einerseits leichter und ökonomischer ist und andererseits Haufwerke mit größeren Abmessungen ermöglicht.

Ein weiterer Vorteil des erfindungsgemäßen Verfahrens ist, dass die anfallenden holzartigen Biomassen für das Haufwerk in ihrem angelieferten Zustand zu einem Haufwerk angeordnet werden können. Es müssen weder Beimischungen von feuchteren Biomassematerialien oder anfänglich oder auch später Feuchtigkeitszuführungen realisiert werden.

Im Falle der Trocknung von nativ-organischen Schlämmen mit üblichen Feuchtegehalten ≥ 70 Ma.-% ist zur Realisierung des erfindungsgemäßen Verfahrens eine definierte Zumischung von strukturgebenden und saugfähigen Materialien, vorzugsweise geschreddertes Holz, erforderlich. Nach dem Ende des Trocknungsprozesses können diese Materialien beispielsweise durch Absiebung zurückgewonnen werden und im Anfallzustand für den Einsatz in weiteren Chargen wiederverwendet werden.

Weiterhin vorteilhaft ist es, wenn mindestens die Gasaustauschflächen der Be- und Entlüftungsvorrichtungen aus einem flächigen Gittermaterial, wie beispielsweise Bewehrungseisenmatten für Stahlbetonteile (Lagermatten), hergestellt sind und eingesetzt werden. Die Größe der Maschen sollte dabei nach der kennzeichnenden Teilchengröße der Biomasse ausgewählt werden. Auswahlkriterium dafür ist die Minimierung des von den Be- und Entlüftungsvorrichtungen verursachten Strömungswiderstandes in Form der jeweils maximal zulässigen Maschenweite. Die Belüftungsvorrichtungen sind kanalartig mit einem vorteilhafterweise dreieckigen Querschnitt ausgebildet, dessen Unterseite vorzugsweise durch den Untergrund, auf dem sie positioniert sind, selbst gebildet wird. Der dreieckige Querschnitt ermöglicht beim Aufsetzen der Vorrichtung selbst einen sicheren Stand und eine ortsfeste Lage. Bei der Anordnung des Biomassehaufwerkes darüber, durch beispielsweise Aufschütten des Materials mit einem Lader oder Bagger, bietet der dreieckige Querschnitt weiterhin den Vorteil, dass durch die senkrecht in Fallrichtung des Biomaterials kleineren Abmessungen der Gitteröffnungen ein Verstopfen durch Füllen der Belüftungsvorrichtungen vermieden wird. Bei Verwendung anderer Materialien und Querschnittsformen müssten unter Umständen während der Ausbildung des Haufwerkes Maßnahmen ergriffen werden, die ein Füllen der Belüftungsvorrichtungen mit Biomassenmaterial bis zu einem unbedenklichen Maße vermeiden.

Der gleiche Effekt wird bei den Entlüftungsvorrichtungen ausgenutzt, indem die Entlüftungsvorrichtungen ebenfalls aus einem flächigen Gittermaterial aufgebaut sind. Vorteilhafterweise sind diese Entlüftungsvorrichtungen pyramidenstumpfartig aufgebaut und werden mit dem verjüngten Querschnitt nach oben auf den Untergrund des Haufwerkes gestellt. Beim im wesentlichen senkrecht von oben erfolgenden Aufschütten des Haufwerkes aus Biomasse, fällt nur eine geringe Menge durch die in Fallrichtung wirksamen Querschnitte der Gitteröffnungen, so dass auch hier durch einen materialfrei gehaltenen Raum der Entlüftungsprozess nicht behindert wird.

Das obere Ende der Entlüftungsvorrichtung wird mit einer rohrartigen Verlängerung versehen, wobei diese Verlängerung aus einem prozesstemperaturbeständigen durchgängigen Material ausgebildet sein sollte. Diese Verlängerung stellt bezüglich des konvektiven Strömungsprozesses eine Erhöhung der triebkraftwirksamen Druckdifferenz dar, ein Zusammenhang, der mit der bekannten Kamingleichung explizit darstellbar ist.

Vorteilhafterweise werden die Belüftungsvorrichtungen in regelmäßigen Abständen über die Länge des Haufwerkes und zueinander und auf beiden Seiten des zukünftigen Haufwerkes auf dem Untergrund so positioniert, dass nach Ausbildung des Haufwerkes 60 bis 90 % der Länge der Belüftungsvorrichtungen vom Haufwerk bedeckt sind und 10 bis 40 % der Länge aus dem Haufwerk herausragen. Dabei sollten die Belüftungsvorrichtungen nur zu 25 bis 40 % der Breite des Gesamthaufwerkes in das Haufwerk hinein positioniert werden. Die Entlüftungsvorrichtungen sollten vorteilhafterweise in der Mitte der Breite des Gesamthaufwerkes positioniert werden und weiterhin im möglichst gleichentfernten Abstand von den in das Haufwerk hineinragenden und ihnen jeweils nächstgelegenen Teilen der Belüftungsvorrichtung.

Vorteilhafterweise ist die mit des erfindungsgemäßen Verfahrens erreichbare einfache und präzise Überwachungs- und Steuerbarkeit der Prozessparameter, wie beispielsweise die Überwachung und Steuerung von Temperaturen ausgewählter Haufwerksbereiche und der Gasmenge- und -zusammensetzung in den Luftaustrittsöffnungen der Entlüftungsvorrichtungen. Ein großer Vorteil ist, dass durch das erfindungsgemäße Verfahren ein sicheres Einhalten einer bestimmten Produktqualität möglich ist.

Ein weiterer ebenfalls signifikanter Vorteil des erfindungsgemäßen Verfahrens besteht darin, dass das getrocknete Haufwerk am gleichen Ort und in gleicher Form gelagert werden kann, ohne dass der Feuchtigkeitsgehalt im Haufwerk wieder ansteigt.

Weitere Vorteile des erfindungsgemäßen Verfahrens bestehen in der großserientauglichen Ausführbarkeit, der vielfachen Wiederverwendbarkeit und der Instandsetzbarkeit der Be- und Entlüftungsvorrichtungen, sowie deren einfachen Entsorgung als reiner Eisenschrott nach Nutzungsende. Ebenfalls kann vorteilhafterweise das Verfahren durch den Einsatz von Funktionseinheiten eines Haufwerkes beliebig oft wiederholt werden, wobei der Anfang und das Ende der Haufwerke jeweils eine Anschlussfläche mit dem gleichen Böschungswinkel wie die Haufwerksseitenflächen aufweist.

Im Weiteren wird die Erfindung an einem Ausführungsbeispiel näher erläutert.

### Beispiel

Auf einen festen, stauwasserfreien und befahrbaren Untergrund aus einer Betondecke werden 4 Belüftungsvorrichtungen so positioniert, dass jeweils 2 im Abstand von 5 m voneinander parallel zueinander und gegenüberliegend angeordnet sind. Die Belüftungsvorrichtungen weisen einen Querschnitt in Form eines gleichschenkligen Dreiecks mit einer Schenkellänge von 0,4 m und einer Basis von 0,3 m auf. Die Gesamtlänge beträgt 3,5 m. Die Seiten des Dreiecks sind aus Lagermatten gefertigt. Die Frischlufteintrittsflächen zweier gegenüberliegender Belüftungsvorrichtungen haben einen Abstand von 11,5 m. In die Mitte des von 4 Belüftungsvorrichtungen gebildeten Vierecks wird die Entlüftungsvorrichtung positioniert. Die Gasaustauschflächen der Entlüftungsvorrichtung bestehen ebenfalls aus Lagermatten, wobei die Entlüftungsvorrichtung in Form eines Pyramidenstumpfes mit einer Kantenlänge von 1,5 m für die untere große Fläche und eine Höhe von 3 m hergestellt worden ist. Die Kanten des Pyramidenstumpfes sind nach oben über die Höhe des eigentlichen Pyramidenkörpers um 1 m verlängert. Diese verlängerten Kanten bilden die Aufnahme und den sicheren Halt für ein PVC-Rohr mit einem Durchmesser von 125 mm. Dieses Rohr weist eine Gesamtlänge von 4 m auf, von denen 3 m über die Haufwerksoberfläche hinausragen.

Nach der Positionierung der Be- und Entlüftungsvorrichtungen mittels eines Laders wird ebenfalls mit dem Lader auf der Betondecke ein Haufwerk in Form einer Miete aus Holzhackschnitzeln aufgebaut. Die Holzhackschnitzel haben einen durchschnittlichen Wassergehalt von 50 - 55 Ma.-%. Die Miete wird in einer Trapezform mit den Abmessungen 10 m untere Breite, 6 m obere Breite, 3,5 m Höhe und 5 m Länge aufgebaut. Anschließend wird auf die offene Oberfläche der Miete eine jeweils 0,5 m dicke Schicht aus Kompost aufgebracht, so dass die abschließenden Maße des Mietenquerschnitts 11 m untere Breite, 7 m obere Breite und 4 m Höhe betragen.

Nach Errichtung des Haufwerkes und Aufbringung der Abdeckungsschicht kann nach ca. 6 Stunden der erste auch optisch deutlich erkennbare Austrag von wasserdampfgesättigter Luft verzeichnet werden. Nach ca. 60 Tagen ist der Trocknungsprozess abgeschlossen und es kann nach Bedarf eine mehrwöchige Lagerung anschließen. Während der Lagerungsphase wird durch die Nutzung der Restwärme des Mietenkörpers eine ausreichende Durchströmung aufrechterhalten, die unter anderem eine Selbstentzündung sicher vermeidet.

## Patentansprüche

1. Verfahren zur Trocknung von Biomasse, bei dem auf einem festen Untergrund Be- und Entlüftungsvorrichtungen in regelmäßigen Abständen innerhalb eines Haufwerkes und auch zueinander positioniert werden, wobei die Belüftungsvorrichtungen am Boden des Haufwerkes angeordnet werden und die Entlüftungsvorrichtungen vom Boden des Haufwerkes bis über die Oberkante des Haufwerkes insgesamt hinaus angeordnet werden, und wobei durch die Anordnung eine Durchströmung des gesamten Haufwerkes von den Be- zu den Entlüftungsvorrichtungen realisiert wird, danach ein Haufwerk ganz oder teilweise aus Biomasse und unter Vermeidung des Eintrags von zusätzlicher Feuchtigkeit in die eingesetzte Biomasse in Form einer Miete über den Be- und Entlüftungsvorrichtungen angeordnet und daduch gekennzeichnet, dass das Haufwerk auf seiner Oberfläche mit einer thermisch isolierenden Schicht versehen wird, die weiterhin technisch gasdicht und feuchtigkeitsabweisend oder feuchtigkeitsspeichernd ausgebildet ist.

2. Verfahren nach Anspruch 1, bei dem der feste Untergrund stauwasserfrei und befahrbar ausgewählt wird.

3. Verfahren nach Anspruch 1, bei dem die Anordnung eines Haufwerkes als trapez- oder dreiecksförmige Miete realisiert wird.

4. Verfahren nach Anspruch 1, bei dem die thermisch isolierende Oberflächenschicht gleichzeitig niederschlagsspeichernd ausgebildet wird.

5. Verfahren nach Anspruch 1, bei dem durch die Belüftungsvorrichtungen die Zufuhr von Frischluft am Boden in das Haufwerk realisiert wird.

6. Verfahren nach Anspruch 1, bei dem Belüftungsvorrichtungen in Form eines Kanals mit einem runden oder dreieckigen oder mehreckigen Querschnitt eingesetzt werden.

7. Verfahren nach Anspruch 1, bei dem durch die Entlüftungsvorrichtungen die Ableitung der im Haufwerk entstandenen und vorhandenen Abluft realisiert wird

8. Verfahren nach Anspruch 1, bei dem die Entlüftungsvorrichtungen in Form eines Pyramidenstumpfes mit einer am oberen Ende angesetzten rohrartigen Verlängerung, die mindestens über die Haufwerksoberfläche hinausragt, eingesetzt werden.

9. Verfahren nach Anspruch 1, bei dem als thermisch isolierende Schicht ein thermisch isolierendes Material mit einem Wärmeüberleitkoeffizienten von 0,1 bis 1,0 W/m² K, vorteilhafterweise von 0,4 W/m² K eingesetzt wird.

10. Verfahren nach Anspruch 1, bei dem als thermisch isolierendes und wasserabweisendes Material Polystyrol oder Holzspäne in Verbindung mit einer Polyethylenfolie eingesetzt wird.

11. Verfahren nach Anspruch 1, bei dem als thermisch isolierendes Material Erde oder verrottetes Material mit einem Wassergehalt von maximal 35 Masse-% mit einer Dicke von 0,1 bis 0,5 m zur Realisierung eines Wärmeüberleitkoeffizienten von 0,2 bis 0,4 W/ m² K eingesetzt werden.

12. Verfahren nach Anspruch 1, bei dem als thermisch isolierendes Material die Wandungen von ortsfesten Anlagen eingesetzt werden.

13. Verfahren nach Anspruch 12, bei dem als thermisch isolierendes Material die Wandungen von ortsfesten Anlagen aus Holz und/oder auf der Basis von Beton eingesetzt werden.

14. Verfahren nach Anspruch 12, bei dem als thermisch isolierendes Material im Seitenbereich des Haufwerkes Holzwände von ortsfesten Anlagen und im Deckenbereich des Haufwerkes Polystyrol oder Holzspäne in Verbindung mit einer Polyethylenfolie oder Erde oder verrottetes Material eingesetzt werden.

## Claims

1. Method for drying biomass in which aerating and venting devices are positioned at regular intervals within a pile and also with respect to one another, wherein the aerating devices are arranged on the bottom of the pile and the venting devices are arranged from the bottom of the pile to over the upper edge of the pile overall, and wherein the arrangement achieves flow through the entire pile from the aerating devices to the venting devices, thereafter a pile wholly or partially of biomass, and avoiding the introduction of additional moisture into the biomass used is arranged in the form of a stack above the aerating and venting devices and **characterized in that** the pile is provided on the surface thereof with a thermally insulating layer which, in addition, is formed to be technically gas-tight and moisture-repellent or moisture-storing.

2. Method according to Claim 1, in which the solid substrate is selected to as to be free from backed-up water and passable.

3. Method according to Claim 1, in which the arrangement of a pile is achieved as a trapezoidal or triangular stack.

4. Method according to Claim 1, in which the thermally insulating surface layer is simultaneously formed so as to be precipitation-storing.

5. Method according to Claim 1, in which the aerating devices achieve the feed of fresh air into the pile at the bottom.

6. Method according to Claim 1, in which the aerating devices are used in the form of a channel having a round or triangular or polygonal cross section.

7. Method according to Claim 1, in which the venting devices remove the off-air formed and present in the pile.

8. Method according to Claim 1, in which the venting devices are used in the form of a truncated pyramid having a tube-like extension which is mounted at the top end and which projects at least beyond the pile surface.

9. Method according to Claim 1, in which a thermally insulating material having a thermal conductivity coefficient of 0.1 to 1.0 W/m² K, advantageously 0.4 W/m² K is used as thermally insulating layer.

10. Method according to Claim 1, in which polystyrene or wood shavings in combination with a polyethylene film are used as thermally insulating and water-repellent material.

11. Method according to Claim 1, in which earth or rotted material having a water content of at most 35% by mass having a thickness of 0.1 to 0.5 m are used as thermally insulating material to achieve a thermal conductivity coefficient of 0.2 to 0.4 W/m² K.

12. Method according to Claim 1, in which the walls of fixed installations are used as thermally insulating material.

13. Method according to Claim 12, in which the walls of fixed installations made of wood and/or based on concrete are used as thermally insulating material.

14. Method according to Claim 12, in which, in the side region of the pile, wooden walls of fixed installations, and in the cover region of the pile, polystyrene or wood shavings in combination with a polyethylene film or earth or rotted material are used as thermally insulating material.

## Revendications

1. Procédé de séchage de biomasse, dans lequel des dispositifs d'amenée d'air et des dispositifs d'extraction d'air sont placés sur un sol ferme à intervalles réguliers à l'intérieur d'un andin et sont également positionnés les uns par rapport aux autres, les dispositifs d'amenée d'air étant disposés à la base de l'andin et les dispositifs d'extraction d'air étant disposés globalement de manière à s'étendre de la base de l'andin jusqu'au bord supérieur de l'andin,
l'agencement permettant de réaliser une traversée de l'ensemble de l'andin depuis le dispositif d'amenée d'air jusqu'au dispositif d'extraction d'air, un andin constitué en totalité ou en partie de biomasse étant alors disposé sous la forme d'une meule qui recouvre les dispositifs d'amenée d'air et les dispositifs d'évacuation d'air, de manière à éviter l'introduction d'humidité supplémentaire dans la biomasse utilisée, **caractérisé en ce que**
l'andin est doté sur sa surface d'une couche thermiquement isolante qui en outre est techniquement étanche aux gaz, repousse l'humidité ou accumule l'humidité.

2. Procédé selon la revendication 1, dans lequel le sol ferme sélectionné ne présente pas d'eau stagnante et peut être parcouru par des engins.

3. Procédé selon la revendication 1, dans lequel l'andin est disposé sous la forme d'une meule trapézoïdale ou triangulaire.

4. Procédé selon la revendication 1, dans lequel la couche de surface thermiquement isolante accumule en même temps les précipitations.

5. Procédé selon la revendication 1, dans lequel l'apport d'air frais à la base de l'andin est réalisé par les dispositifs d'amenée d'air.

6. Procédé selon la revendication 1, dans lequel les dispositifs d'amenée d'air utilisés présentent la forme d'un canal de section transversale circulaire, triangulaire ou polygonale.

7. Procédé selon la revendication 1, dans lequel l'évacuation de l'air vicié produit et présent dans l'andin est réalisée par les dispositifs d'extraction d'air.

8. Procédé selon la revendication 1, dans lequel les dispositifs d'extraction d'air utilisés présentent la forme d'un tronc de pyramide doté d'un prolongement tubulaire placé à l'extrémité supérieure et qui déborde au moins au-dessus de la surface de l'andin.

9. Procédé selon la revendication 1, dans lequel la couche thermiquement isolante utilisée est un matériau thermiquement isolant dont le coefficient de conduction thermique est de 0,1 à 1,0 W/m².K et avantageusement de 0,4 W/m².K.

10. Procédé selon la revendication 1, dans lequel le matériau thermiquement isolant et repoussant l'eau utilisé est le polystyrène ou des copeaux de bois associés à une feuille de polyéthylène.

11. Procédé selon la revendication 1, dans lequel le matériau thermiquement isolant est de la terre ou un matériau putréfié dont la teneur en eau est d'au plus 35 % en masse et d'une épaisseur de 0,1 à 0,5 m, de manière à obtenir un coefficient de conduction thermique de 0,2 à 0,4 W/m².K.

12. Procédé selon la revendication 1, dans lequel le matériau thermiquement isolant utilisé est constitué des parois d'installations fixes.

13. Procédé selon la revendication 12, dans lequel le matériau isolant utilisé est constitué des parois d'installations fixes en bois et/ou à base de béton.

14. Procédé selon la revendication 12, dans lequel le matériau isolant utilisé au niveau des côtés de l'andin est constitué des parois en bois d'installations fixes et au niveau du toit de l'andin, de polystyrène ou de copeaux de bois associés à une feuille de polyéthylène, ou encore de terre ou de matériau putréfié.
